# EUROPÄISCHE PATENTSCHRIFT

(11) **EP 0 925 209 B1**
(45) Veröffentlichungstag und Bekanntmachung des Hinweises auf die Patenterteilung: **12.12.2001**
(21) Anmeldenummer: 97941825.8
(22) Anmeldetag: 26.08.1997
(51) Int. Cl.: B60R 25/04

(54) **FAHRZEUGSICHERUNGSANORDNUNG**
VEHICLE SECURITY DEVICE
DISPOSITIF SERVANT A EMPECHER LE VOL D'UN VEHICULE

(30) Priorität: 16.09.1996 DE 19637657
(43) Veröffentlichungstag der Anmeldung: 30.06.1999
(73) Patentinhaber: ROBERT BOSCH GMBH, 70442 Stuttgart (DE)
(72) Erfinder: WEIGL, Andreas, D-76351 Linkenheim-Hochstetten (DE); WEISS, Karl-Ernst, D-76275 Ettlingen (DE); SCHROFF, Clemens, D-76698 Ubstadt-Weiher (DE); DIEBOLD, Bernd, D-77866 Rheinau (DE); WEYERSTALL, Bernd, D-42369 Wuppertal (DE); RIEHEMANN, Thomas, D-77830 Bühlertal (DE); SZABLEWSKI, Piotr, D-42399 Wuppertal (DE)
(86) Internationale Anmeldenummer: DE9701849
(87) Internationale Veröffentlichungsnummer: WO9812084

(56) Entgegenhaltungen:
- EP-A- 0 600 243
- EP-A- 0 695 675
- WO-A-90/15211
- WO-A-93/05987
- WO-A-96/20100
- DE-A- 4 434 450
- DE-C- 4 331 664
- DE-C- 19 526 530
- GB-A- 2 294 144

## Beschreibung

### Stand der Technik

Die Erfindung geht aus von einer Fahrzeugsicherungsanordnung nach der Gattung des Hauptanspruchs. Aus der DE-PS 43 25 657 ist eine Diebstahlsicherung bekannt, bei der der Diebstahlschutz von Fahrzeugen dadurch bewirkt wird, daß zielgerichtet funktionswichtige Baugruppen blockiert werden. Wirkmodule übernehmen dabei das Sperren oder Freischalten der jeweils zugeordneten Baugruppen. Ein auf einem Codeschlüssel hinterlegter Code wird von einem Codeleser erfaßt und an alle Wirkmodule weitergeleitet. Ein Logikteil des Wirkmoduls vergleicht den Code mit einer Information, die im Codespeicher des Wirkmoduls abgelegt ist. Stimmen beide nicht überein, deaktiviert das Wirkmodul die zugeordnete Funktionsbaugruppe. Auch ist vorgesehen, daß bei fehlender Übereinstimmung das Wirkmodul eine Zerstörung der betreffenden Baugruppe herbeiführen kann. Datenübertragung und Datenvergleich in den Wirkmodulen werden durch das Einführen des Codeschlüssels in den Codeleser ausgelöst.

Der Erfindung liegt die Aufgabe zugrunde, eine Fahrzeugsicherungsanordnung anzugeben, die einen erhöhten Diebstahlschutz realisiert.

Aus der DE-A-4434450 ist eine Wegfahrsperre mit kurzer Entriegelungszeit bekannt. Ein Diebstahlschutzsteuergerät ist über eine Signalleitung mit zumindest einem Steuergerät verbunden, das fahrzeugwesentliche Funktionen beeinflusst. Eine dauerhafte Freigabe der Steuergeräte für das Fahren erfolgt nur nach Empfang eines gültigen Codes. Dem Diebstahlschutzsteuergerät wird über eine Eingabeeinrichtung ein Schlosscode zugeführt. Der Schlosscode wird in dem Diebstahlschutzsteuergerät aufbereitet und entschlüsselt. Über die Signalleitung wird er sodann an ein oder mehrere betriebsrelevante Steuergeräte übertragen.

Diese Aufgabe wird durch eine Fahrzeugsicherungsanordnung mit den im Hauptanspruch angegebenen Merkmalen gelöst. Erfindungsgemäß wird ein verbesserter Diebstahlschutz erzielt, indem die Freischaltung eines jeden Funktionssteuergeräts in Abhängigkeit von einem Vergleich zweier Codeworte erfolgt. Das erste wird vom jeweiligen Funktionssteuergerät und das zweite von einer Eingabeeinheit bereitgestellt. Ein Diebstahlschutzsteuergerät initiiert die Bereitstellung der beiden Codeworte. Durch Einbeziehen mehrerer für den Fahrbetrieb relevanter Funktionssteuergeräte erhöht sich die Sicherheit gegen unberechtigtes Inbetriebnehmen des Fahrzeugs weiter. Jedes Funktionssteuergerät überprüft für sich, ob ein berechtigter Nutzer auf das Fahrzeug zugreift. Dadurch wird insbesondere ein Austausch von Funktionssteuergeräten gegen Geräte, die beispielsweise von gestohlenen Fahrzeugen stammen, erschwert, da die Funktionssteuergeräte sowohl auf das Diebstahlschutzsteuergerät als auch auf die Eingabeeinheit abgestimmt sein müssen. Ist dies nicht der Fall, verweigert das Funktionssteuergerät seine Nutzung. Die Steuerung der Freigabeprozedur durch das Diebstahlschutzsteuergerät erhöht die Abhörsicherheit, indem es Codeworte zufallsgesteuert beeinflußt. Das Diebstahlschutzsteuergerät trifft eine zielgenaue Vorauswahl, welche der möglicherweise mehreren Eingabeeinheiten die Berechtigung erhält, das zweite Codewort bereitzustellen.

Eine zweckmäßige Weiterbildung sieht vor, daß eine Weiterleitung des zweiten Codewortes, das von der Eingabeeinheit bereitgestellt wird, an das Funktionssteuergerät dann erfolgt, wenn das zweite Codewort mit dem vom Diebstahlschutzsteuergerät erwarteten Codewort übereinstimmt. Eine weitere im Diebstahlschutzsteuergerät ausgeführte Berechtigungsabfrage erhöht den Diebstahlschutz. Die Maßnahme erhöht zudem den Bedienkomfort, etwa wenn durch Übertragungsfehler das zweite Codewort verstümmelt bei dem Diebstahlschutzsteuergerät eintrifft. Dieses kann eine Aufforderung an die Eingabeeinheit auslösen, die Übertragungs- bzw. Bereitstellungsprozedur des zweiten Codewortes zu wiederholen, ohne daß das falsche zweite Codewort bereits zu einer Fehlfunktion der Funktionssteuergeräte geführt hätte.

In einer weiteren erfindungsgemäßen Maßnahme ist vorgesehen, daß eine Generierung der beiden Codeworte mittels eines Berechtigungalgorithmus und/oder eines Schlüsselwortes erfolgt. Insbesondere bei einem fahrzeugspezifischen Schlüsselwort kann der Berechtigungsalgorithmus für jedes Fahrzeug gleich gewählt sein. Diese Trennung stellt zum einen sicher, daß jedem Fahrzeug ein individuelles Codewort -zugeordnet wird. Andererseits ist für den Hersteller gewährleistet, daß durch die Verwendung ein und desselben Berechtigungsalgorithmus für jedes Fahrzeug ein hohes Maß an Standardisierung erreicht wird, das sich kostensenkend im Herstellungsprozeß bemerkbar macht.

Eine weitere zweckmäßige Verbesserung sieht vor, daß zur Generierung der beiden Codeworte ein drittes Codewort verwendet ist, dessen Bereitstellung durch das Diebstahlschutzsteuergerät erfolgt. Dadurch läßt sich ein Schutz gegen Abhören realisieren, indem beispielsweise für jeden Initiierungsvorgang ein anderes drittes Codewort zufallsgesteuert herangezogen wird. Gleichbleibende Kommunikationsvorgänge werden somit vermieden, wodurch das Risiko sinkt, das Fahrzeug durch gezielte Manipulation in einen fahrtauglichen Zustand zu versetzen.

Eine vorteilhafte Weiterbildung sieht vor, daß die Initiierung des Diebstahlschutzsteuergeräts nach Betätigen eines Schalters erfolgt. Die Kopplung des Freigabeverfahrens, beispielsweise mit einem Zündschloß, erhöht die Sicherheit, indem konventionelle Schließeinrichtungen mit berücksichtigt werden.

In einer Verbesserung haben sich als zweckmäßige Eingabeeinheiten Transponder und/oder elektronische Chipkarte herausgestellt. Ein Transponder erhöht den Bedienkomfort durch drahtlose Kommunikation mit dem Diebstahlschutzsteuergerät. Für die Verwendung einer elektronischen Chipkarte spricht, daß sich die mechanische Zugänglichkeit der Leseeinrichtung durch zusätzliche Kontrollmechanismen erschweren läßt, was ebenfalls der Sicherheit dienlich ist.

Eine weitere Maßnahme zeichnet sich erfindungsgemäß dadurch aus, daß eine Master-Eingabeeinheit das Schlüsselwort enthält. Diese Master-Eingabeeinheit wird benötigt, wenn Funktionssteuergeräte oder Eingabeeinheiten ausgewechselt werden sollen. Dadurch wird der Austausch fahrzeugspezifischer Module bei gestohlenen Fahrzeugen beträchtlich erschwert.

Eine weitere vorteilhafte Ausgestaltung sieht ein Verfahren zur Parametrierung einer Fahrzeugsicherungsanordnung vor, wobei Funktionssteuergerät und Diebstahlschutzsteuergerät in einem Parametriermodus betrieben werden. Ein zusätzliches Gerät teilt dem Funktionssteuergerät und dem Diebstahlschutzsteuergerät das fahrzeugspezifische Schlüsselwort mit, das daraufhin seitens des Diebstahlschutzsteuergeräts an die Eingabeeinrichtung weitergegeben wird. Diese Vorgehensweise ermöglicht einen aus fertigungstechnischer Sicht günstigen Parametrierablauf am Bandende.

Weitere zweckmäßige Weiterbildungen aus weiteren abhängigen Ansprüchen ergeben sich aus der Beschreibung.

### Zeichnung

Es zeigen
Figur 1 einen prinzipiellen Aufbau einer Fahrzeugsicherungsanordnung,
Figur 2 ein Flußdiagramm einer möglichen Arbeitsweise,
Figur 3 ein Flußdiagramm zur Parametrierung und Figur 4 ein Flußdiagramm für Austauscharbeiten.

### Beschreibung der Ausführungsbeispiele

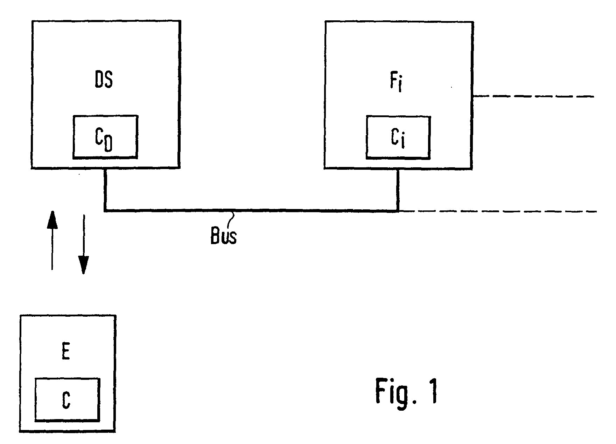

Gemäß Figur 1 steht ein Diebstahlschutzsteuergerät DS mit zumindest einem Funktionssteuergerät Fᵢ über einen Bus in Wechselwirkung. Das Diebstahlschutzsteuergerät DS kommuniziert mit einer Eingabeeinheit E. Das Funktionssteuergerät Fᵢ stellt ein erstes Codewort Cᵢ, die Eingabeeinheit E ein zweites Codewort C, das Diebstahlschutzsteuergerät DS ein drittes Codewort C_{D} bereit.

Jedes der Funktionssteuergeräte Fᵢ - der Index ᵢ steht hierbei für das ᵢ-te Funktionssteuergerät Fᵢ - generiert jeweils für sich das erste Codewort Cᵢ. In einem Kraftfahrzeug sind ausstattungsabhängig unterschiedliche Funktionssteuergeräte Fᵢ vorhanden, beispielsweise Steuergeräte für Motorsteuerung, Getriebesteuerung, Antiblockiersystem, Antischlupfregelung, Start der Steuerung, elektrische Lenkung, Zündsteuerung, Zentralverriegelung oder Niveausteuerung. Sie alle werden für den reibungslosen Betrieb des Kraftfahrzeugs benötigt. Jedes Funktionssteuergerät Fᵢ erzeugt für sich und unabhängig von den anderen das erste Codewort Cᵢ. Die dafür notwendigen Algorithmen und Daten sind in jedem einzelnen Funktionssteuergerät Fᵢ hinterlegt. Der Datenaustausch der Funktionssteuergeräte Fᵢ untereinander sowie mit dem Diebstahlschutzsteuergerät DS erfolgt über den Bus.

Die Eingabeeinheit E ist, beispielsweise durch einen Algorithmus, in die Lage versetzt, in Abhängigkeit von einem Schlüsselwort das zweite Codewort C bereitzustellen. Als Eingabeeinheit E ist ein Transponder verwendet. Er beinhaltet Sender sowie Empfänger für elektromagnetische Wellen und kann beispielsweise die Form einer elektronischen Chipkarte aufweisen, als Schlüsselanhänger ausgebildet oder in dem Fahrzeugschlüssel integriert sein. Mehrere als Transponder ausgebildete Eingabeeinheiten E ermöglichen eine Benutzung desselben Fahrzeuges durch mehrere Personen. Neben einer drahtlosen Kommunikation kann als Eingabeeinheit E auch eine elektronische Chipkarte verwendet werden. Ihr zugeordnet ist eine Kartenlese/-schreibstation, in die die Karte eingeführt werden muß. Die Datenübertragung zwischen der Eingabeeinheit E und dem Diebstahlschutzsteuergerät DS läßt sich grundsätzlich beliebig realisieren, so wären beispielsweise hierfür Infrarotsignale ebenso denkbar.

Das Diebstahlschutzsteuergerät DS übernimmt den Datenaustausch mit der Eingabeeinheit E.

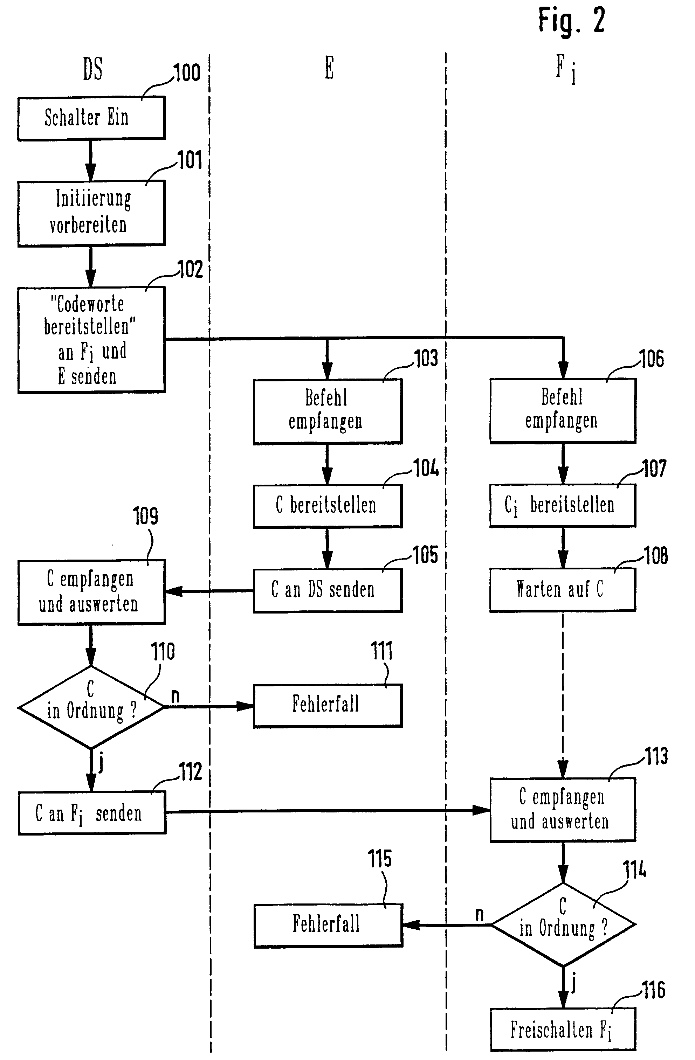

Unter Bezugnahme auf Figur 2 wird nachfolgend die Funktionsweise der in Figur 1 wiedergegebenen Anordnung beschrieben. Der Beginn der Fahrberechtigungsprozedur wird durch Schritt 100, Schalter ein, ausgelöst. Der Schalter wird beispielsweise über einen Zündschlüssel betätigt.

Dadurch erkennt das Diebstahlschutzsteuergerät DS, daß ein Starten des Fahrzeugs gewünscht ist.

Es bereitet daraufhin die Initiierung vor, Schritt 101. Der Datenaustausch des Diebstahlschutzsteuergeräts DS mit Eingabeeinheiten E und Funktionssteuergeräten Fᵢ erfolgt nach einem sogenannten Challenge/Response-Verfahren. Das Diebstahlschutzsteuergerät DS erzeugt eine Challenge, eine sogenannte Reizung. Die Challenge kann einen Befehl und/oder das dritte Codewort C_{D} enthalten. Der Befehl löst beim jeweiligen Empfänger, im Ausführungsbeispiel bei Funktionssteuergerät Fᵢ und Eingabeeinheit E, eine Datenverarbeitungsprozedur aus, bei der das erste und zweite Codewort C_{i,} C erzeugt werden. Wird als zusätzliche Information der Challenge das dritte Codewort C_{D} neben dem Befehl übertragen, kann ein im Diebstahlschutzsteuergerät DS integrierter Zufallsgenerator aus Gründen der Abhörsicherheit das dritte Codewort C_{D} für jede Berechtigungsprüfung neu zur Verfügung stellen. Ebenso könnte der Schritt 101 beinhalten, eine spezielle Eingabeeinheit E auszuwählen, der die Challenge gesendet werden soll. Dabei lassen sich gezielt bestimmte Eingabeeinheiten E sperren, sollten sie verlorengegangen sein. Auch ist denkbar, diejenige Eingabeeinheit E bevorzugt anzusprechen, mittels derer das Fahrzeug zuletzt benutzt wurde.

In einem Schritt 102 sendet das Diebstahlschutzsteuergerät DS die im Schritt 101 bereitgestellte Challenge. Sie enthält den Befehl "Codewort bereitstellen" und gegebenenfalls das dritte Codewort C_{D}. Alle an den Bus angeschlossenen Funktionssteuergeräte Fᵢ und die seitens des Diebstahlschutzsteuergeräts DS ausgewählten Eingabeeinheiten E erhalten diese Challenge. Sowohl Eingabeeinheit E als auch Funktionssteuergeräte Fᵢ stellen ihre Codeworte C, Cᵢ bereit, nachdem sie in Schritt 103, bzw. 106 den Befehl des Diebstahlschutzsteuergerätes DS empfangen haben. In Schritt 104 beginnt die jeweilige Eingabeeinheit E, das zweite Codewort C zu erzeugen. Hierbei wird ein in der Eingabeeinheit E hinterlegter Berechtigungsalgorithmus angestoßen, der in Abhängigkeit eines beispielsweise fahrzeugspezifischen Schlüsselworts und/oder des dritten Codewortes C_{D} das zweite Codewort C berechnet.
Ebenso verfahren unabhängig voneinander die angeschlossenen Funktionsteuergeräte Fi. In einem Schritt 107 stellt jedes Funktionssteuergerät Fᵢ in Abhängigkeit von einem Berechtigungsalgorithmus für sich das erste Codewort Cᵢ bereit. Der Algorithmus ist in jedem Funktionssteuergerät Fᵢ separat hinterlegt. Er berechnet in Abhängigkeit von dem beispielsweise fahrzeugspezifischen Schlüsselwort und/oder von dem dritten Codewort C_{D} das entsprechende erste Codewort Cᵢ.

Es ist darauf hinzuweisen, daß die grundsätzliche Vorgehensweise, wie die Codewort Cᵢ, C erzeugt werden, bei den Funktionssteuergeräten Fᵢ untereinander übereinstimmen muß und mit der Eingabeeinheit E identisch ist. Berechtigungsalgorithmus und die Daten, auf die dieser zurückgreift, müssen bei Funktionssteuergerät Fᵢ und Eingabeeinheit E übereinstimmen, um das Fahrzeug in Betrieb nehmen zu können. Greift der Berechtigungsalgorithmus des Funktionssteuergerätes Fᵢ auf das Schlüsselwort zu, so muß auch der Berechtigungsalgorithmus der Eingabeeinheit in der gleichen Weise verfahren. Benötigt der Berechtigungsalgorithmus des Funktionssteuergeräts Fᵢ das dritte Codewort C_{D}, so muß auch der Berechtigungsalgorithmus der Eingabeeinheit E darauf zurückgreifen. Stimmen also Berechtigungsalgorithmus, das jeweils verwendete Schlüsselwort und gegebenenfalls das dritte Codewort überein für das Funktionssteuergerät Fᵢ und die Eingabeeinheit E, so sind erstes und zweites Codewort, Cᵢ, C, identisch.

Die Eingabeeinheit E sendet das im Schritt 104 erzeugte und bereitgestellte zweite Codewort C in einem Schritt 105 an das Diebstahlschutzsteuergerät DS. Dieses empfängt das zweite Codewort C und wertet es gegebenenfalls aus, Schritt 109. Zur Auswertung kann beispielsweise so vorgegangen werden, daß in Abhängigkeit von dem im Diebstahlschutzsteuergerät DS hinterlegten Berechtigungsalgorithmus und des ebenfalls dort hinterlegten Schlüsselworts ein Kontrollcodewort berechnet wird. Verwendet der Berechtigungsalgorithmus von Schritt 104 auch das dritte Codewort C_{D}, so ist es auch im Schritt 109 entsprechend zu berücksichtigen. Anschließend erfolgt ein Vergleich des zweiten Codeworts C mit dem Kontrollcodewort. In Schritt 110 erfolgt die Abfrage, ob das zweite Codewort C in Ordnung ist. Ist dies nicht der Fall, unterscheiden sich also das zweite Codewort C und das Kontrollcodewort, liegt ein Fehlerfall vor, Schritt 111. Denkbar ist es, die Schritte 102 bis 110 nochmals zu wiederholen, um Übertragungsfehler zwischen der Eingabeeinheit E und dem Diebstahlschutzsteuergerät DS zu vermeiden. Ebenso könnte jedoch der Fehlerfall sofort dazu führen, die Freischaltung der Funktionssteuergeräte Fᵢ weiterhin zu unterbinden. Ist gemäß der Abfrage, Schritt 110, das zweite Codewort C in Ordnung, schließt sich ein Schritt 112 an. Hierbei sendet das Diebstahlschutzsteuergerät DS das zweite Codewort über den Bus an alle Funktionssteuergeräte Fᵢ. Das zweite Codewort C wird hierbei unverarbeitet direkt als von der Eingabeeinheit E ermitteltes Ergebnis weitergegeben.

Während der zuletzt beschriebenen Schritte warten die Funktionssteuergeräte Fᵢ in einem Schritt 108 auf das zweite Codewort C. Sämtliche Funktionssteuergeräte Fᵢ empfangen das zweite Codewort C und werten es aus, Schritt 113. Jedes Funktionssteuergerät Fᵢ führt in einer Abfrage 114 einen Vergleich des zweiten Codewortes C mit dem jeweils in Schritt 107 bereitgestellten ersten Codewort Cᵢ durch. Die beiden Codeworte C, Cᵢ stimmen dann überein, wenn jeweils Berechtigungsalgorithmus, Schlüsselwort und gegebenenfalls das dritte Codewort C_{D}, einmal in der Eingabeeinheit E, einmal in dem Funktionssteuergerät Fᵢ abgelegt, identisch sind. Stimmen erstes und zweites Codewort Cᵢ, C nicht überein, tritt der Fehlerfall ein, Schritt 115. Im Fehlerfall schaltet sich das entsprechende Funktionssteuergerät Fᵢ nicht frei und blockiert so den Startvorgang. Stimmen erstes und zweites Codewort Cᵢ, C überein, schaltet sich das betreffende Funktionssteuergerät Fᵢ selbst frei, Schritt 116. Wie bereits ausgeführt, führt jedes der Funktionssteuergeräte Fᵢ die Schritte 106 bis 108 und 113 bis 116 in Abhängigkeit vom jeweiligen Berechtigungsalgorithmus und Schlüsselwort aus, die in den jeweiligen Funktionssteuergeräten Fᵢ hinterlegt sind. Der Fehlerfall, Schritt 115, kann somit auch dann auftreten, wenn beispielsweise bei Austausch eines Funktionssteuergerätes Fᵢ entweder nicht der Berechtigungsalgorithmus mit dem in der Eingabeeinheit hinterlegten übereinstimmt oder wenn die fahrzeugspezifischen Schlüsselworte der Eingabeeinheit E und des Funktionssteuergerätes Fᵢ voneinander abweichen. Damit hemmt auch der unautorisierte Austausch eines Funktionssteuergerätes Fᵢ den Startvorgang.

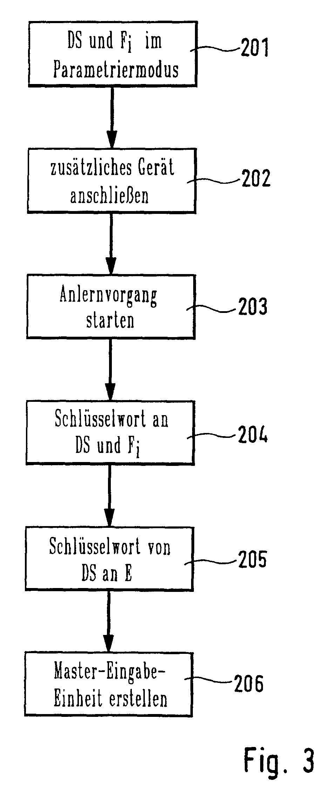

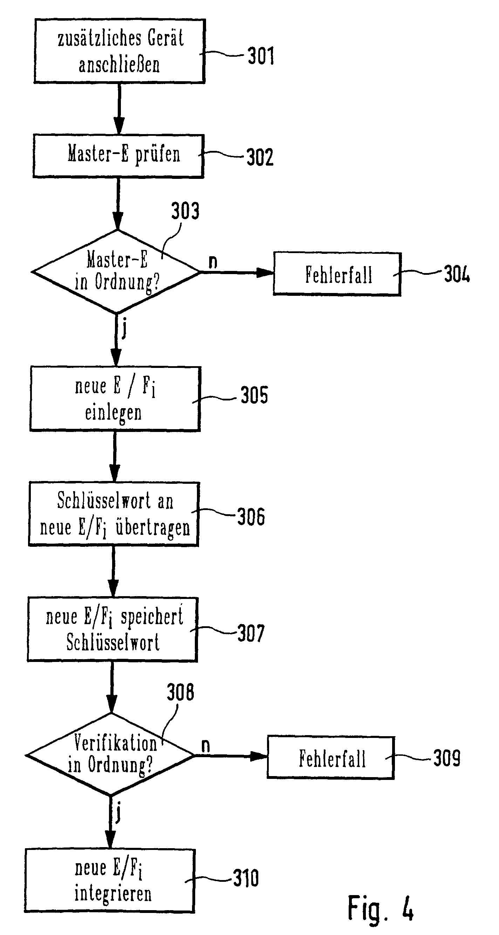

Unter Bezugnahme auf Figur 3 wird nachfolgend eine Möglichkeit der Inbetriebnahme der Fahrzeugsicherungsanordnung beschrieben. Die anschließend beschriebenen Verfahrensschritte können beispielsweise am Bandende nach Einbau der Funktionssteuergeräte Fᵢ in das Kraftfahrzeug vorgenommen werden. Gemäß Schritt 201 werden das Diebstahlschutzsteuergerät DS und die Funktionssteuergeräte Fᵢ in einem Parametriermodus betrieben. Dabei ist denkbar, daß der Berechtigungsalgorithmus bereits jeweils fest im Diebstahlschutzsteuergerät DS und in den Funktionssteuergeräten Fᵢ implementiert ist. Zum erfolgreichen Durchführen der Berechtigungsprozedur ist das fahrzeugspezifische Schlüsselwort notwendig. In einem nächsten Schritt 202 wird ein zusätzliches Gerät angeschlossen. Beispielsweise über eine vorgesehene Diagnoseschnittstelle kann das zusätzliche Gerät über den Bus sowohl mit dem Diebstahlschutzsteuergerät DS als auch mit den Funktionssteuergeräten Fᵢ kommunizieren. Mit Hilfe des zusätzlichen Geräts läßt sich der Anlernvorgang beispielsweise von dem Bedienpersonal starten, Schritt 203. Anschließend wird in einem Schritt 204 das Schlüsselwort an das Diebstahlschutzsteuergerät DS und an die Funktionssteuergeräte Fᵢ übertragen. Gegebenenfalls sind diese Ubertragungsprozesse durch geeignete Kontrollprozeduren zu verifizieren. Anschließend sendet das Diebstahlschutzsteuergerät DS das Schlüsselwort an die Eingabeeinheit E, Schritt 205. Insbesondere im Hinblick auf spätere Wartungsarbeiten ist es sinnvoll, den Eingabeeinheiten E unterschiedliche Berechtigungsfunktionen zuzuweisen. So kann vorgesehen sein, daß die Parametrierung eines ausgetauschten Funktionssteuergeräts Fᵢ nur in Verbindung mit einer Master-Eingabeeinheit erfolgen kann. Auch das Anlernen neuer Eingabeeinheiten E läßt sich zweckmäßig nur in Verbindung mit der Master-Eingabeeinheit durchführen. Nach Schritt 205 wird in einem Schritt 206 eine Eingabeeinheit E ausgewählt, der als Master-Eingabeeinheit eine besondere Berechtigung zugewiesen wird. Im Ablaufdiagramm nach Figur 4 wird eine Möglichkeit beschrieben, wie neue Eingabeeinheiten E und neue Funktionssteuergeräte Fᵢ nach der Erstinbetriebnahme zu parametrieren sind. In einem Schritt 301 wird ein zusätzliches Gerät angeschlossen, beispielsweise an einer Diagnoseschnittstelle. Hierauf wird die Master-Eingabeeinheit geprüft, beispielsweise durch das im Zusammenhang mit Figur 2 erläuterte Challenge-Response-Verfahren, Schritt 302. Ist die Master-Eingabeeinheit nicht in Ordnung, Abfrage 303, wird als Fehlerfall, Schritt 304, der Vorgang unterbrochen. Ist die Master-Eingabeeinheit in Ordnung, besteht die Berechtigung, in einem Schritt 305 ein neues Funktionssteuergerät Fᵢ in dem Kraftfahrzeug einzubauen oder eine neue Eingabeeinheit E anzulernen. Sind die neue Eingabeeinheit E oder das neue Funktionssteuergerät Fᵢ in der Lage, Daten auszutauschen, wird das Schlüsselwort an diese in einem Schritt 306 übertragen. Das Schlüsselwort wird durch die neue Eingabeeinheit E oder durch das neue Funktionssteuergerät Fᵢ gespeichert, Schritt 307. Dieser Anlernvorgang wird in einer Abfrage 308 "Verifikation in Ordnung?" überprüft. Diese Verifikation kann beispielsweise darin bestehen, daß das Diebstahlschutzsteuergerät DS nach dem bereits beschriebenen Challenge-Response-Verfahren ein erstes oder zweites Codewort Cᵢ, C von dem neuen Funktionssteuergerät Fᵢ oder von der neuen Eingabeeinheit E erzwingt, das mit dem im Diebstahlschutzsteuergerät DS errechneten Kontrollcodewort verglichen wird. Ist die Verifikation nicht in Ordnung, kann die Anlernprozedur unterbrochen oder gegebenenfalls wiederholt werden, Schritt 309. Ist die Verifikation in Ordnung, werden die neuen Funktionssteuergeräte Fᵢ und neue Eingabeeinheiten E integriert, Schritt 310. Denkbar ist auch, der neuen Eingabeeinheit E im Diebstahlschutzsteuergerät DS einen bestimmten Empfängercode zuzuweisen, um die neue Eingabeeinheit E gezielt ansteuern zu können. Diese Daten könnten gegebenenfalls auch der Master-Eingabeeinheit mitgeteilt werden.

## Patentansprüche

1. Fahrzeugsicherungsanordnung mit wenigstens einem Funktionssteuergerät (Fᵢ), das ein erstes Codewort (Cᵢ) bereitstellt, mit einem Diebstahlschutzsteuergerät (DS), das über einen Bus mit dem Funktionssteuergerät (Fᵢ) verbunden ist, und mit zumindest einer Eingabeeinheit (E), die dem Diebstahlschutzsteuergerät (DS) ein zweites Codewort (C) übermittelt, welches das Diebstahlschutzsteuergerät (DS) an das Funktionssteuergerät (Fᵢ) weiterleitet, wobei in dem Funktionssteuergerät (Fᵢ) ein Vergleich des ersten Codewortes (Cᵢ) mit dem zweiten Codewort (C) erfolgt und bei Übereinstimmung sich das Funktionssteuergerät (Fᵢ) freischaltet, wobei das Diebstahlschutzsteuergerät (DS) die Bereitstellung des zweiten Codewortes (C) initiiert, **dadurch gekennzeichnet, daß** das Diebstahlschutzsteuergerät (DS) die Bereitstellung des ersten Codewortes (Cᵢ) initiiert.

2. Fahrzeugsicherungsanordnung nach Anspruch 1, **dadurch gekennzeichnet, daß** eine Weiterleitung des zweiten Codewortes (C) an das Funktionssteuergerät (Fᵢ) dann erfolgt, wenn das zweite Codeowort (C) mit dem vom Diebstahlschutzsteuergerät (DS) erwarteten Codewort übereinstimmt.

3. Fahrzeugsicherungsanordnung nach einem der vorhergehenden Ansprüche, **dadurch gekennzeichnet, daß** eine Generierung des ersten Codewortes (Cᵢ) und/oder des zweiten Codewortes (C) mittels eines Berechtigungsalgorithmus und/oder eines Schlüsselworts erfolgt.

4. Fahrzeugsicherungsanordnung nach einem der vorhergehenden Ansprüche, **dadurch gekennzeichnet, daß** zur Generierung des ersten Codewortes (Cᵢ) und/oder des zweiten Codewortes (C) ein drittes Codewort (C_{D}) verwendet ist, dessen Bereitstellung durch das Diebstahlschutzsteuergerät (DS) erfolgt.

5. Fahrzeugsicherungsanordnung nach Anspruch 3, **dadurch gekennzeichnet, daß** das Schlüsselwort fahrzeugspezifisch gewählt ist.

6. Fahrzeugsicherungsanordnung nach Anspruch 4, **dadurch gekennzeichnet, daß** das dritte Codewort (C_{D}) zufällig erzeugt ist.

7. Fahrzeugsicherungsanordnung nach einem der vorhergehenden Ansprüche, **dadurch gekennzeichnet, daß** die Initiierung der Bereitstellung des ersten Codewortes (Cᵢ) und des zweiten Codewortes (C) durch das Diebstahlschutzsteuergerät (DS) nach Betätigen eines Schalters erfolgt.

8. Fahrzeugsicherungsanordnung nach einem der vorhergehenden Ansprüche, **dadurch gekennzeichnet, daß** als Eingabeeinheit (E) Transponder und/oder elektronische Chipkarte verwendet sind.

9. Fahrzeugsicherungsanordnung nach einem der vorhergehenden Ansprüche 3 bis 8, **dadurch gekennzeichnet, daß** eine Master-Eingabeeinheit das Schlüsselwort enthält.

10. Verfahren zur Parametrierung einer Fahrzeugsicherungsanordnung nach einem der vorhergehenden Ansprüche, **dadurch gekennzeichnet, daß** das Funktionssteuergerät (Fᵢ) und das Diebstahlschutzsteuergerät (DS) in einem Parametriermodus betrieben werden, in einem ersten Schritt ein zusätzliches Gerät, mit dem sich der Anlernvorgang starten läßt, an den Bus angeschlossen wird, dem Funktionssteuergerät (Fᵢ) und dem Diebstahlschutzsteuergerät (DS) das Schlüsselwort mitgeteilt wird und in einem zweiten Schritt das Schlüsselwort durch das Diebstahlschutzsteuergerät (DS) der Eingabeeinrichtung (E) mitgeteilt wird.

11. Verfahren zum Anlernen neuer Eingabeeinrichtungen (E) und/oder Funktionssteuergeräte (Fᵢ) nach Anspruch 9, **dadurch gekennzeichnet, daß** zum Anlernen einer neuen Eingabeeinrichtung (E) und/oder eines Funktionssteuergerätes (Fᵢ) die Master-Eingabeeinrichtung benutzt wird, um der neuen Eingabeeinrichtung (E) und/oder dem neuen Funktionssteuergerät (Fᵢ) das Schlüsselwort mitzuteilen.

## Claims

1. Vehicle security arrangement having at least one function control unit (Fᵢ) which provides a first codeword (Cᵢ), having an anti-theft control unit (DS) which is connected to the function control unit (Fᵢ) via a bus, and having at least one input unit (E) which transmits to the anti-theft control unit (DS) a second codeword (C), which the anti-theft control unit (DS) forwards to the function control unit (Fᵢ), the first codeword (Cᵢ) being compared with the second codeword (C) in the function control unit (Fᵢ), and the function control unit (Fᵢ) being disconnected if there is a match, the anti-theft control unit (DS) initiating provision of the second codeword (C), **characterized in that** the anti-theft control unit (DS) initiates provision of the first codeword (Cᵢ).

2. Vehicle security arrangement according to Claim 1, **characterized in that** the second codeword (C) is forwarded to the function control unit (Fᵢ) if the second codeword (C) matches the codeword expected by the anti-theft control unit (DS).

3. Vehicle security arrangement according to one of the preceding claims, **characterized in that** the first codeword (Cᵢ) and/or the second codeword (C) are/is generated using an authorization algorithm and/or a key word.

4. Vehicle security arrangement according to one of the preceding claims, **characterized in that** a third codeword (C_{D}), which is provided by the anti-theft control unit (DS), is used to generate the first codeword (Cᵢ) and/or the second codeword (C).

5. Vehicle security arrangement according to Claim 3, **characterized in that** the key word is chosen so as to be specific to a vehicle.

6. Vehicle security arrangement according to Claim 4, **characterized in that** the third codeword (C_{D}) is produced randomly.

7. Vehicle security arrangement according to one of the preceding claims, **characterized in that** provision of the first codeword (Cᵢ) and of the second codeword (C) is initiated by the anti-theft control unit (DS) when a switch has been operated.

8. Vehicle security arrangement according to one of the preceding claims, **characterized in that** the input unit (E) used is a transponder and/or an electronic smart card.

9. Vehicle security arrangement according to one of the preceding Claims 3 to 8, **characterized in that** a master input unit contains the key word.

10. Method for parameterizing a vehicle security arrangement according to one of the preceding claims, **characterized in that** the function control unit (Fᵢ) and the anti-theft control unit (DS) are operated in a parameterization mode, an additional unit, which can be used to start the training procedure, is connected to the bus in a first step, the function control unit (Fᵢ) and the anti-theft control unit (DS) are notified of the key word, and the anti-theft control unit (DS) notifies the input device (E) of the key word in a second step.

11. Method for training new input devices (E) and/or function control units (Fᵢ) according to Claim 9, **characterized in that**, to train a new input device (E) and/or a function control unit (Fᵢ), the master input device is used to notify the new input device (E) and/or the new function control unit (Fᵢ) of the key word.

## Revendications

1. Dispositif de sécurité pour un véhicule, comprenant :
- au moins un appareil de commande de fonctionnement (Fi), qui tient prêt un premier mot de code (Ci),
- un appareil antivol (DS), relié par un bus à l'appareil de commande de fonctionnement (Fi), et
- au moins une unité d'entrée (E) qui transmet un deuxième mot de code (C) à l'appareil antivol (DS) qui lui-même le retransmet à l'appareil (Fi), dans lequel s'effectue une comparaison entre le premier mot de code (Ci) et le second mot de code (C), et s'il y a coïncidence, l'appareil (Fi) se libère, l'appareil antivol (DS) initiant la mise à disposition du deuxième mot de code (C),
**caractérisé en ce que**
l'appareil de commande antivol (DS) initie la mise à disposition du premier mot de code (Ci).

2. Dispositif selon la revendication 1,
**caractérisé en ce qu'**
une transmission du deuxième mot de code (C) à l'appareil de commande de fonctionnement (Fi) s'effectue quand le deuxième mot de code (C) coïncide avec le mot de code attendu par l'appareil antivol (DS).

3. Dispositif selon l'une quelconque des revendications 1 ou 2,
**caractérisé en ce que**
le premier mot de code (Ci) et/ou le deuxième mot de code (C) est généré par un algorithme de calcul et/ou un mot clé.

4. Dispositif selon l'une quelconque des revendications précédentes,
**caractérisé en ce que**
pour générer le premier mot de code (Ci) et/ou le deuxième mot de code (C), on utilise un troisième mot de code (CD) qui est mis à disposition par l'appareil antivol (DS).

5. Dispositif selon la revendication 3,
**caractérisé en ce que**
le mot clé est choisi spécifiquement pour le véhicule.

6. Dispositif selon la revendication 4,
**caractérisé en ce que**
le troisième mot de code (CD) est obtenu de manière aléatoire.

7. Dispositif selon l'une quelconque des revendications précédentes,
**caractérisé en ce que**
l'initiation de la mise à disposition du premier mot de code (Ci) et du deuxième mot de code (C), par l'appareil antivol (DS) a lieu après actionnement d'un contacteur.

8. Dispositif selon l'une quelconque des revendications précédentes,
**caractérisé en ce qu'**
on utilise, comme unité d'entrée (E) un transpondeur et/ou une carte à puce électronique.

9. Dispositif selon l'une quelconque des revendications 3 à 8,
**caractérisé en ce qu'**
une unité maîtresse d'entrée contient le mot clé.

10. Procédé pour paramétrer un dispositif de sécurité selon l'une quelconque des revendications précédentes,
**caractérisé en ce que**
l'appareil de commande de fonctionnement (Fi) et l'appareil de commande de la protection antivol (DS) fonctionnent selon un mode paramétrique et, dans une première étape, un appareil supplémentaire, avec lequel l'opération de formation peut démarrer, est raccordé au bus, le mot clé étant transmis à l'appareil (Fi) et à l'appareil antivol (DS) qui lui-même, dans une seconde étape, le transmet à l'unité d'entrée (E).

11. Procédé pour informer de nouvelles unités d'entrée (E) et/ou appareils de commande de fonctionnement (Fi) du dispositif conforme à la revendication 9,
**caractérisé en ce qu'**
afin d'informer une nouvelle unité d'entrée (E) et/ou un appareil de commande (Fi), on utilise l'unité maîtresse d'entrée pour transmettre le mot clé au nouveau dispositif (E) et/ou au nouvel appareil (Fi).
